# EUROPEAN PATENT APPLICATION

(11) **EP 2 650 043 A1**
(43) Date of publication of application: **16.10.2013**
(21) Application number: 11847181.2
(22) Date of filing: 25.11.2011
(51) Int. Cl.: B01D 65/06, C02F 1/44, C02F 3/12

(54) **CHEMICAL CLEANING METHOD FOR IMMERSED MEMBRANE ELEMENT**

(30) Priority: 10.12.2010 JP 2010275413
(71) Applicant: Toray Industries, Inc., Tokyo 103-8666 (JP)
(72) Inventor: KANTANI, Seiko, Otsu-shi, Shiga 520-8558 (JP); KITANAKA, Atsushi, Otsu-shi, Shiga 520-8558 (JP); KIHARA, Masahiro, Otsu-shi, Shiga 520-8558 (JP); MIYOSHI, Toshiro, Otsu-shi, Shiga 520-8558 (JP)
(74) Representative: Prüfer & Partner GbR European Patent Attorneys
(86) International application number: PCT/JP2011/077135
(87) International publication number: WO 2012/077506

(57) **Abstract**

When conducting a chemical cleaning of a submerged membrane element used when subjecting an organic wastewater containing high concentration of manganese to membrane bioreactor treatment, in a bioreactor treatment tank, organic matter decomposition and manganese removal are simultaneously and efficiently conducted, and high recovery effect is achieved without adversely affecting microorganisms in activated sludge by a cleaning method for a submerged membrane element used in a membrane bioreactor treatment in which organic wastewater containing 1 mg/L or more of manganese is subjected a biological treatment in a bioreactor treatment tank and then subjected to solid-liquid separation by a membrane filtration device provided in the bioreactor treatment tank, in which after a first liquid containing an oxidizing agent is injected from a secondary side of the submerged membrane element to a primary side thereof and maintained for a certain period of time, the first liquid containing an oxidizing agent is suction-discharged from the secondary side to the outside of the system, and then a second liquid containing an acid is injected from the secondary side of the submerged membrane element to the primary side thereof and maintained for a certain period of time, followed by conducting suction filtration operation.

## Description

### TECHNICAL FIELD

The present invention relates to a chemical cleaning method for a submerged membrane element arranged in a wastewater treatment equipment having a biological treatment tank in which an organic wastewater such as sewage containing high concentration of manganese or industrial wastewater is treated by an activated sludge, and a membrane filtration device in which an activated sludge mixed liquid in the biological treatment tank is subjected to solid-liquid separation.

### BACKGROUND ART

A membrane bioreactor used in treating sewage or industrial wastewater is a treatment method in which a biological treatment is conducted in a biological reaction tank and solid-liquid separation is conducted using a filtration membrane or the like submerged in the reaction tank.

The membrane bioreactor is generally that a membrane surface is constantly cleaned by air aeration from the lower part of the membrane. However, in the case of where operation is continued over a long period of time, membrane permeation flux is decreased. Therefore, substances causing the decrease in membrane permeation flux must be periodically chemical-cleaned by sodium hypochlorite, citric acid or the like. Chemical cleaning conditions of a membrane vary depending on quality of water to be treated, activated sludge properties, operating membrane permeation flux and a kind of a membrane, but the chemical cleaning must be efficiently carried out by a chemical in small amount as possible.

The chemical cleaning method of a membrane includes a cleaning method outside a tank, in which the whole membrane separation device or a membrane element is taken out of a tank and cleaned, and a cleaning method in a tank, in which a chemical is injected into a membrane permeate flow passage while submerging the membrane filtration device in the tank. From the problems of workability and a space, the latter cleaning method in a tank is becoming a mainstream method in particularly a flat membrane type module.

However, the cleaning method in a tank involves various problems such that since the filtration membrane is difficult to be uniformly cleaned by the chemical, recovery property after cleaning is difficult to stabilize, and additionally, since the chemical injected into the membrane permeate flow passage flows out in the tank during cleaning and this may have a possibility to adversely affect microorganisms in the activated sludge, the amount of the chemical used cannot be increased. To solve those problems, Patent Document 1 proposes a method in which a chemical decomposing substances attached to a membrane is injected into a permeate flow passage of a membrane separation device in an amount from about 10 to 20% of a retention volume in a membrane element, and the state that the chemical in the permeate flow passage is brought into contact with the filtration membrane is maintained for about 1 hour.

However, the attached substances that clog a membrane used in a membrane bioreactor contain not only undecomposed organic matters by activated sludge, but inorganic matters contained in a water to be treated in high concentration. In such a case, chemicals having different effects must be used in combination depending on the adhering substances. For example, Patent Document 2 and Patent Document 3 propose a cleaning method in tank, in which sodium hypochlorite for decomposing Organic matters, and hydrochloric acid, citric acid, oxalic acid or the like for removing inorganic matters are used and are sequentially injected by dividing into two stages.

Those methods have the effect of effectively removing substances that clog a membrane, such as inorganic matters and organic matters, and recovering permeation flux of a membrane.

### BACKGROUND ART DOCUMENT

### PATENT DOCUMENT

Patent Document 1: JP-A-8-99025
Patent Document 2: JP-A-8-266875
Patent Document 3: JP-A-9-290141

### SUMMARY OF THE INVENTION

### PROBLEMS THAT THE INVENTION IS TO SOLVE

However, in the case of cleaning a submerged membrane element used in a high concentration manganese-containing wastewater treatment, even though the method of Patent Document 1 is used, the cleaning is conducted under the same chemical cleaning conditions regardless of an amount and quality of substances that clog a membrane. Therefore, recovery property is poor in single chemical cleaning, and frequency of chemical cleaning and concentration of a chemical had to be increased. Additionally, the chemical does not uniformly spread over the entire membrane surface even though the concentration of the chemical in one cleaning is increased, thereby causing uneven cleaning. Therefore, there was a problem that recovery property is poor.

Even thought the methods of Patent Document 2 and Patent Document 3 are used, chemicals are combined and those are sequentially injected by diving into two stages, stain remains on the membrane under the state that the cleaning by each chemical is not sufficient. As a result, there was a problem that recovery property is poor.

There was further problem that the chemical flows out in a tank during cleaning by repeating chemical cleaning and using an excessive concentration of a chemical, thereby adversely affecting microorganisms in activated sludge.

The present invention solves the above problems, and has an object to provide a chemical cleaning method for a submerged membrane element used when subjecting an organic wastewater containing high concentration of manganese to membrane bioreactor treatment, in a bioreactor treatment tank, in which organic matter decomposition and manganese removal are efficiently and sufficiently conducted, and high recovery effect is achieved without adversely affecting microorganisms in activated sludge.

### MEANS FOR SOLVING THE PROBLEMS

In order to solve the above-mentioned problems, the present invention has following constitutions.
(1) A cleaning method for a submerged membrane element used in a membrane bioreactor treatment in which organic wastewater containing 1 mg/L or more of manganese is subjected a biological treatment in a bioreactor treatment tank and then subjected to solid-liquid separation by a membrane filtration device provided in the bioreactor treatment tank,
   in which after a first liquid containing an oxidizing agent is injected from a secondary side of the submerged membrane element to a primary side thereof and maintained for a certain period of time, the first liquid containing an oxidizing agent is suction-discharged from the secondary side to the outside of the system, and then a second liquid containing an acid is injected from the secondary side of the submerged membrane element to the primary side thereof and maintained for a certain period of time, followed by conducting suction filtration operation.
(2) The cleaning method for a submerged membrane element according to (1), in which the oxidizing agent is an aqueous solution having pH of 12 or more and containing at least one selected from the group consisting of sodium hypochlorite, chlorate and chlorine dioxide.
(3) The cleaning method for a submerged membrane element according to (1) or (2), in which the acid is a mixed liquid of an organic acid and an inorganic acid.
(4) The cleaning method for a submerged membrane element according to (3), in which the organic acid is oxalic acid or citric acid.
(5) The cleaning method for a submerged membrane element according to (3) or (4), in which the inorganic acid contains at least one selected from the group consisting of hydrochloric acid, nitric acid and sulfuric acid.
(6) The cleaning method for a submerged membrane element according to any of (3) to (5), in which the mixed liquid has pH of 2 or less.

### ADVANTAGE OF THE INVENTION

By using the present invention, organic matter decomposition and manganese removal can be efficiently and sufficiently conducted, and high recovery effect can be achieved without adversely affecting microorganisms in activated sludge.

Specifically, by injecting a first liquid containing an oxidizing agent from a secondary side of a submerged membrane element to a primary side thereof, manganese in the vicinity of a membrane surface is first precipitated, and at the same time, organic matters are decomposed. In this case, a gap between a membrane clogged by the manganese precipitated and a supporting plate becomes a bag shape, and this makes it possible to maintain the first liquid on the membrane surface and to spread over the entire membrane. This has the effect of uniformly contacting the first liquid with the entire membrane, and sufficiently conducting organic matter decomposition.

Thus, after forming a gap between a membrane and a supporting plate into a bag shape and maintaining a first liquid for a certain period of time, superfluous first liquid is suction-discharged, and a second liquid containing an acid is then injected from a secondary side of a submerged membrane element to a primary side thereof. In this case, since a gap between the membrane clogged by manganese precipitated and the supporting plate has a bag shape, superfluous second liquid is prevented from flowing out in activated sludge, and additionally, it becomes possible to maintain the second liquid and uniformly bringing the second liquid into contact with the membrane. This makes it possible to efficiently dissolve the precipitated manganese by the second liquid in a minimum amount necessary for uniformly spreading over the entire membrane surface.

Furthermore, when the oxidizing agent contained in the first liquid is an aqueous solution having pH of 12 or higher and containing at least one selected from the group consisting of sodium hypochlorite, chlorate and chlorine dioxide, and the acid contained in the second liquid is a mixed liquid of an organic acid and an inorganic acid, it becomes possible to arrange pH environment for promoting organic matter decomposition and manganese dissolution by the respective chemicals, and the effect of efficiently obtaining recovery property is achieved.

### BRIEF DESCRIPTION OF THE DRAWINGS

Fig. 1 is a schematic view of a membrane bioreactor treatment apparatus according to the present invention.
Figs. 2 are schematic views showing the state that a gap between a membrane clogged by manganese precipitated and a supporting plate becomes a bag shape. Fig. 2(a) shows the state that a bag shape has been formed (the state filled with a chemical), and Fig. 2(b) shows the state that a membrane has been closely contacted with a supporting plate (the state that a chemical has been discharged).

### MODE FOR CARRYING OUT THE INVENTION

The present invention relates to a cleaning method for a submerged membrane element used in subjecting organic wastewater containing 1 mg/L or more of manganese to a membrane bioreactor treatment in a treatment tank, in which matters adhered to a membrane are efficiently and sufficiently removed, and high recovery effect is achieved.

Matters adhered to a membrane by the wastewater mainly includes manganese (soluble and solid state) and organic matters. To efficiently and sufficiently remove those, respectively, and achieve high recovery effect, both organic matter decomposition and manganese removal must be conducted.

The soluble manganese used here means manganese ion having valency of bivalent, trivalent or septivalent and manganese that is in the state of bonding to other ions and organic matters coexisting in wastewater, and flows out to a secondary side of a membrane during membrane filtration. The solid state manganese used here means tetravalent precipitated manganese, and manganese that is in the state of bonding to other ions and organic matters coexisting in wastewater, is in the state adhered to activated sludge, and that stays at a primary side of a membrane together with activated sludge during membrane filtration.

The present invention is characterized in that chemicals having different effect are used by dividing into two stages in order to efficiently conduct organic matter decomposition and manganese removal. Furthermore, the chemicals having an alkali and an inorganic acid, for arranging pH environment mixed therein, respectively, are preferably used in order to promote the effect of each chemical.

As a result of intensive investigations, the present inventors have found that in the case of a membrane used in the treatment of organic wastewater containing high concentration of manganese, when an oxidizing agent is injected from a secondary side of a submerged membrane element into a primary side thereof, manganese adhered to the membrane together with organic matters comes into contact with the oxidizing agent and precipitates, and the precipitated manganese clogs the membrane to form a gap between the membrane and a supporting plate into a bag shape, and has the effect of maintaining the chemical on the membrane surface. This makes it possible to decompose and remove the organic matters, oxidize and precipitate manganese, prevent superfluous chemical from flowing out in activated sludge, uniformly spread the chemical on the entire membrane surface, and efficiently clean by the chemical in a requisite minimum amount. This makes it possible to achieve high recovery effect without adversely affecting microorganisms in activated sludge, which is preferable.

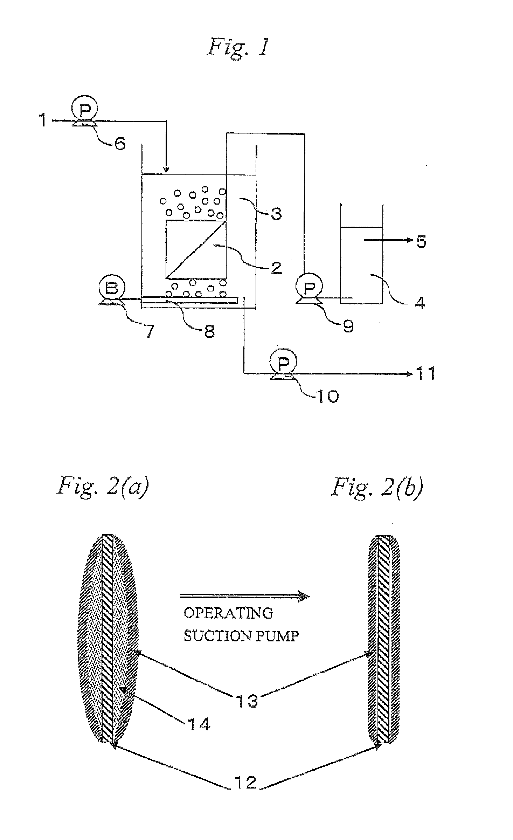

Fig. 1 is a schematic view of steps of the general membrane bioreactor treatment apparatus used in the present invention. The apparatus of Fig. 1 includes an MBR (Membrane Bioreactor) membrane filtration device 2 (hereinafter referred to as MBR membrane filtration device 2) for obtaining a filtrate by filtering an organic wastewater 1 with a microfiltration membrane, a bioreactor treatment tank 3 for submerging and setting the MBR membrane filtration device 2 in a mixed liquid of an organic wastewater 1 and activated sludge, and a filtrate tank 4 for storing filtrate obtained by membrane-filtering the mixed liquid of the organic wastewater 1 and activated sludge with the MBR membrane filtration device 2. Treated water 5 is reutilized as treating water or is released.

Treatment flow showing the embodiment of the chemical cleaning method for a submerged membrane element of the present invention is described below.

The organic wastewater 1 containing high concentration of manganese is fed to the bioreactor treatment tank 3, and the organic wastewater 1 is subjected to bioreactor treatment in the bioreactor treatment tank 3. Activated sludge introduced in the bioreactor treatment tank 3 is generally utilized in wastewater treatment or the like, and withdrawn sludge or the like in other wastewater treatment facilities is generally used as seed sludge. Residence time of the organic wastewater in the bioreactor treatment tank 3 is generally from 1 to 24 hours, but the residence time is appropriately selected depending on properties of the organic wastewater.

The organic wastewater 1 having been subjected to bioreactor treatment in the bioreactor treatment tank 3 is filtered with the MBR membrane filtration device 2 in the same bioreactor treatment tank 3. The treated water 5 filtered is stored in the filtrate tank 4.

In the present invention, the organic wastewater means wastewater containing organic pollutants, such was sewage, industrial wastewater and the like. Water quality index indicating mass of organic pollutants contained in the wastewater is not particularly limited, but TOC (Total Organic Carbon), BOD (Biochemical Oxygen Demand), COD (Chemical Oxygen Demand) and the like are preferably used. TOC indicates carbon concentration (mg/L) in pollutants contained in the target wastewater. BOD is an index for quantifying organic matter having high biodegradability of organic matters contained in the target organic wastewater, using microorganisms. COD is an index for quantifying an amount of organic matters contained in the target organic wastewater, using an oxidizing agent (sewage examination method 1997 version, edited by Japan Sewage Works Association).

To enhance handling property and physical durability of a filtration membrane, the MBR membrane filtration device 2 desirably has, for example, a flat membrane element structure in which a filtration membrane is adhered onto a portion where a filtrate flow passage material has been sandwiched between both surfaces of a frame. The flat membrane element structure has high removal effect of stain by shear force in the case of giving parallel flux to the membrane surface, and is therefore suitable to the present invention. The flat membrane element structure includes a rotational flat membrane structure in which a flat membrane has been wound spirally.

Membrane structure of the filtration membrane used in the MBR membrane filtration device 2 includes a porous membrane and a composite membrane comprising a combination of a porous membrane and a functional layer, but is not particularly limited. Specific examples of those membranes include porous membranes such as a polyacrylonitrile porous membrane, a polyimide porous membrane, a polyether sulfone porous membrane, a polyphenylenesulfide sulfone porous membrane, a polytetrafluoroethylene porous membrane, a polyvinylidene fluoride porous membrane, a polypropylene porous membrane, and a polyethylene porous membrane. The polyvinylidene fluoride porous membrane and the polytetrafluoroethylene porous membrane have high chemical resistance, and therefore are particularly preferred. Furthermore, composite membranes comprising those porous membranes and a rubbery polymer such as crosslinking silicone, polybutadiene, polyacrylonitrile butadiene, ethylene propylene rubber or neoprene rubber, as a functional layer can be used in the MBR membrane filtration device 2.

The filtration membrane used here means a membrane having a pore diameter of from about 0.01 to 10 µm. The opening is rougher than that of an ultrafiltration membrane by which separation by molecular sieve is generally conducted, and the general operation pressure is from reduced pressure state to 200 kPa.

The bioreactor treatment tank 3 is not particularly limited so long as the organic wastewater 1 can be stored therein and the MBR membrane filtration device 2 can be submerged in a mixed liquid of the organic wastewater 1 and activated sludge. A concrete tank, a fiber-reinforced plastic tank and the like are preferably used. The inside of the bioreactor treatment tank 3 may be split into a plurality of tanks. A part of the tanks split may be utilized as a tank for submerging the membrane filtration device 2, and other tanks may be utilized as a denitrification tank such that the organic wastewater is circulated among the tanks split.

The activated sludge introduced in the bioreactor treatment tank 3 is activated sludge generally utilized in wastewater treatment or the like, and withdrawn sludge in other wastewater treatment facilities, and the like are generally used as seed sludge. The membrane bioreactor is operated in a sludge concentration of from about 2,000 to 20,000 mg/L. The bioreactor method makes it possible to dean water by that microorganisms utilize the component having high biodegradability in the organic wastewater 1 as feed.

The filtrate water tank 4 is not particularly limited so long as filtrate can be stored. A concrete tank, a fiber-reinforced plastic tank and the like are preferably used. In order to filter the organic wastewater 1 with the MBR membrane filtration device 2, a pump and the like may be provided between the MBR membrane filtration device 2 and the filtrate tank 4, and in order to apply hydraulic head pressure difference, filtrate level in the filtrate tank 4 may be lower than liquid level of the organic wastewater I in the bioreactor treatment tank 3. In Fig. 1, filtration by a suction pump 9 is carried out.

The organic wastewater 1 containing high concentration of manganese in the present invention is not particularly limited so long as it is organic wastewater containing 1 mg/L or more of manganese. The organic wastewater preferably contains 3 mg/L or more of manganese. On the other hand, where the concentration of manganese contained is less than 1 mg/L, manganese adhesion on the membrane surface is not remarkable, and the effect of applying the present invention becomes difficult to be developed.

Measurement method of the manganese concentration is not particularly limited, and examples thereof include ICP (Inductively Coupled Plasma) emission spectrometry, ICP mass spectrometry, flame atomic absorption spectrometry, electrothermal atomic absorption spectrometry, and periodic acid absorption spectroscopy. ICP emission spectrometry and ICP mass spectrometry are preferably used. The total manganese amount in the sample is measured by adding an acid such as nitric acid or hydrochloric acid to the sample and thermally decomposing organic matters, dissolving a solid body containing residual manganese in water, and measuring with ICP emission spectrometric analyzer. On the other hand, the soluble manganese amount is measured by filtering the sample with a filter paper having a pore diameter of I µm, adding an acid such as nitric acid or hydrochloric acid to the filtrate and thermally decomposing organic matters, dissolving a solid body containing residual manganese in water, and measuring with ICP emission spectrometric analyzer. Furthermore, a value obtained by subtracting soluble manganese amount from the total manganese amount is calculated as a solid-state manganese amount (sewage test method, edited by Japan Sewage Works Association, 1997).

The oxidizing agent contained in the first liquid in the present invention is not particularly limited so long as it is a chemical having oxidation power. At least one selected from the group consisting of sodium hypochlorite, chlorate and chlorine dioxide is preferred. The oxidizing agent has the effect of precipitating manganese to form a gap between a membrane and supporting plate into a bag shape, and additionally to decompose organic matters. Manganese is first precipitated by injecting a first liquid from a secondary side of the submerged membrane element to a primary side thereof, thereby forming gap between a membrane and a supporting plate into a bag shape. Therefore, the oxidizing agent can be uniformly maintained on the membrane surface. This makes it possible to efficiently optimize the time necessary for organic matter decomposition, a concentration, and an amount of a chemical. Furthermore, by using sodium hypochlorite, chlorate or chlorine dioxide, having pH of 12 or more, precipitation of manganese is accelerated to make easy to form a gap between a membrane and a supporting plate into a bag shape, and additionally, decomposition of materials derived from microorganisms constituting activated sludge, such as sugar and protein, contained in organic matters, and organic matters forming a complex with manganese can be sufficiently conducted, which is more preferred.

The concentration of the oxidizing agent used is not particularly limited. In the case of, for example, sodium hypochlorite, the concentration is from 1,000 to 10,000 mg/L, and more preferably from 3,000 to 7,000 mg/L. An alkali mixed to increase pH of the oxidizing agent is adjusted according to the concentration and pH of the oxidizing agent, and therefore is not particularly limited. As a result of investigations by the present inventors, they have found that in the case of using the oxidizing agent having pH adjusted to from 5 to 12, the recovery ratio is enhanced with increasing pH, and when the oxidizing agent has pH of 12, 1.3 times higher effect is obtained as compared with the case that pH is 5. From this fact, in the present invention, by using the oxidizing agent in which an alkali has been added to the oxidizing agent used to adjust the pH to from 11 to 14, particularly 12 or more, the effect is further enhanced, which is preferable.

In the present invention, the first liquid is required to be injected in a direction of from the secondary side to the primary side. The reason for this is that the chemical is directly brought into contact with manganese and organic matters in a membrane pores in the state that the membrane is submerged in the bioreactor tank.

After injecting the first liquid containing an oxidizing agent from the secondary side of the membrane into the primary side thereof, the first liquid is required to be maintained for a certain period of time. The "certain period of time" used here means the time necessary to precipitate manganese, to form a gap between a membrane and a supporting plate into a bag shape and additionally to decompose organic matters. Therefore, the certain period of time is preferably set to an appropriate time depending on the adhesion amount to a membrane. Although not particularly limited, the time is generally 30 minutes or more, and more preferably from 1 to 2 hours.

The "bag shape" used here is the state that the first liquid injected from the secondary side to the primary side is maintained in a gap between a membrane clogged by manganese oxidized and precipitated and a supporting plate, and means the state that the membrane is clogged, and inflow and outflow of a liquid to the bioreactor tank do not substantially occur. Fig. 2 shows a cross-sectional view of a membrane element in which a bag shape has been formed after injecting the first liquid. The thickness of the bag-shaped body is not particularly limited, but is generally 0.1 mm or more, and particularly preferably from 0.3 to 1 mm.

In the present invention, after injecting the first liquid and maintaining the liquid for a certain period of time, the first liquid remained in the gap between a membrane and a supporting plate is suction-discharged from the secondary side to the outside of the system. The reason for this is that the second liquid is made easy to inject and manganese removal effect by the second liquid is made to be sufficiently exerted. Furthermore, outflow of superfluous chemical to activated sludge and generation of harmful gas such as chlorine gas can be prevented.

The acid contained in the second liquid preferably uses a mixed liquid of an organic acid and an inorganic acid. Examples of the organic acid used here include oxalic acid and citric acid, and those have the effect of dissolving manganese oxidized and precipitated. By mixing an inorganic acid and decreasing pH, the acid has the effect to arrange pH environment that promotes manganese dissolution, which is more preferred. The inorganic acid preferably contains at least one selected from the group consisting of hydrochloric acid, nitric acid and sulfuric acid. Particularly, in the present invention, since the environment in which pH around the membrane has been increased is formed by the oxidizing agent of the first liquid, use of a mixed liquid in which the pH has been decreased by adding an inorganic acid, rather than an organic acid alone, as the second liquid makes it possible to sufficiently exert manganese removal effect by the organic acid, which is preferred.

The concentration of the organic acid and the inorganic acid is appropriately be adjusted depending on the degree of fouling of the membrane. The concentration of the organic acid is preferably from 5,000 to 30,000 mg/L, and more preferably from 10,000 to 25,000 mg/L. The concentration of the inorganic acid that is mixed to decrease pH of the organic acid is adjusted depending on the concentration and pH of the organic acid, and therefore is not particularly limited. A mixed liquid in which hydrochloric acid having a concentration of preferably from 1,000 to 10,000 mg/L, and more preferably from 3,000 to 7,000 mg/L is added to adjust pH to be 2 or less is preferably used. As a result of investigations by the present inventors, they have found that in the case of using a mixed liquid in which hydrochloric acid is mixed with an organic acid having pH of 2.1 when not adjusted so as to adjust pH to 1 to 2, the recovery ratio is enhanced with decreasing pH, and when adjusting the pH to 1.1, high effect of 1.5 times or more the effect of the non-adjusted organic acid is achieved. From this fact, the pH of the organic acid used in the present invention is preferably adjusted to 2 or less, and particularly by adjusting the pH to 1.1 or less, the effect is further enhanced, which is preferable.

The injection direction of the second liquid is that the second liquid is required to inject from the secondary side toward the primary side which is the same as the case of the first liquid. This has the effect of uniformly spreading the second liquid over the membrane surface of a bag-shaped body formed by manganese precipitated. Thus, by directly bringing the second liquid in contact with manganese precipitated, the manganese precipitated can be sufficiently dissolved in the second liquid, and high recovery effect is achieved.

### EXAMPLES

The present invention is specifically described below by reference to examples and comparative examples, but it should be understood that the present invention is not limited by those examples.

After continuously operating a membrane bioreactor apparatus for about 3 months using fiber production step wastewater as water to be treated, four sets of separation membranes (manufactured by Toray Industries, Inc., submerged membrane for sewage and wastewater, material: polyvinylidene fluoride, membrane area: 1.4 m²) in which decrease in the amount of permeate was observed were cleaned in a tank by the respective different cleaning methods (one set: 1.4 m² x 5 membranes). Operation conditions are shown in Table 1. Chemical cleaning conditions are that four kinds of methods shown in Table 2 were carried out using sodium hypochlorite (pH 11.7) and sodium hydroxide, and oxalic acid (pH 2.1) and hydrochloric acid. Each chemical was injected from the secondary side of the submerged element toward the primary side thereof, and maintained for 2 hours after the injection such that sufficient cleaning effect is achieved. The amount of each chemical was 5 L/one membrane. When changing the chemical, a suction pump was operated, and the chemical remained in the membrane was suction-discharged. After completion of the chemical cleaning in each condition, filtration was started, and the recovery ratio of the amount of permeate was compared. The amount of permeate is represented by unit membrane area and membrane filtration flow rate per unit time. The recovery ratio is the comparison between the amount of permeate of a membrane at the initial stage of operation before 3 months and the amount of permeate of the membrane after cleaning. Cleaning conditions, recovery ratio and stable operation period after chemical cleaning are shown in Table 2.

**[Table 1]**

| Items | Contents |
|---|---|
| Water to be treated | Fiber production step wastewater |
| Quality of water to be treated (Average value) | TOC: 300 mg/L |
| | COD: 1,300 mg/L |
| | T-N: 8,7 mg/L |
| | T-P: 4.3 mg/L |
| | T-Mn: 4.1 mg/L |
| Amount of water to be treated | 13 m²/day |
| Volume of membrane bioreactor tank | 8 m³ |
| Sludge condition | Membrane bioreactor tank MLSS: 5,000 mg/L to 12,000 mg/L |
| | Membrane bioreactor tank DO: 0.5 to 4.0 mg/L |
| Residence time | 6 hours |
| Sludge circulation amount | 2 times of amount of water to be treated 26 m³/day |
| Temperature of water to be treated | 22 to 36°C |
| Membrane conditions | Membrane used: Submerged membrane for sewage and wastewater (material: PVDF) 1.4 m² x 5 membranes x 4 sets = 28 m² |
| | Membrane permeation flux: 0.46 m/day (amount of water to be treated: 13 m³/day) |
| | Membrane cleaning air flow rate: 225 L/min) (15 L/min per one membrane) |

| | |
|---|---|
| TOC: Total Organic Carbon COD: Chemical Oxygen Demand T-N: Total Nitrogen T-P: Total Phosphorus T-Mn: Total Manganum MLSS: Mixed Liquor Suspended Solids DO: Dissolved Oxygen | |

**[Table 2]**

| | Content of chemical cleaning | Recovery ratio of amount of permeate |
|---|---|---|
| Comparative Example I (Chemical cleaning condition 1) | Oxalic acid 10,000 mg/L No pH adjustment (pH 2.1) | 29% |
| Comparative Example 2 (Chemical cleaning condition 2) | Oxalic acid 10,000 mg/L No pH adjustment (pH 2.1) | 66% |
| | ↓ | |
| | Sodium hypochlorite 5,000 mg/L No pH adjustment (pH 10.3) | |
| Example 1 (Chemical cleaning condition 3) | Sodium hypochlorite 5,000 mg/L pH adjustment (pH 12) | 88% |
| | ↓ | |
| | Oxalic acid 10,000 mg/L No pH adjustment (pH 2.1) | |
| Example 2 (Chemical cleaning condition 4) | Sodium hypochlorite 5,000 mg/L pH adjustment (pH 12) | 100% |
| | ↓ | |
| | Oxalic acid 10,000 mg/L pH adjustment (pH 1.02) | |

### (Comparative Example 1)

Chemical cleaning condition 1: After contacting 10,000 mg/L of oxalic acid for 2 hours, suction filtration operation was restarted. Sodium hypochlorite, sodium hydroxide and hydrochloric acid were not used. A bag-shaped body was not formed in a gap between a membrane and a supporting plate through the whole process of the chemical cleaning condition 1.

### (Comparative Example 2)

Chemical cleaning condition 2: After injecting 10,000 mg/L of oxalic as a first liquid and contacting for 2 hours, residual chemical was suction-discharged. After injecting 5,000 mg/L of sodium hypochlorite as a second liquid and contacting for 2 hours, suction filtration operation was restarted. Sodium hydroxide and hydrochloric acid were not used. A bag-shaped body was not formed in a gap between a membrane and a supporting plate through the whole process of the chemical cleaning condition 2.

### (Example 1)

Chemical cleaning condition 3: 5,000 mg/L of sodium hypochlorite adjusted pH thereof to 12 by adding sodium hydroxide was injected as a first liquid and contacted for 2 hours. As a result, it could be confirmed that a bag-shaped body was formed in a gap between a membrane and a supporting plate. After the contact with the first liquid for 2 hours, residual chemical was suction-discharged. 10,000 mg/L of oxalic acid was injected as a second liquid and contacted for 2 hours. As a result, a bag-shaped body was dissolved. After the contact with the second liquid for 2 hours, suction filtration operation was restarted.

### (Example 2)

Chemical cleaning condition 4: 5,000 mg/L of sodium hypochlorite, adjusted pH thereof to 12 by adding sodium hydroxide was injected as a first liquid and contacted for 2 hours. As a result, it could be confirmed that a bag-shaped body was formed in a gap between a membrane and a supporting plate. After the contact with the first liquid for 2 hours, residual chemical was suction-discharged. A chemical obtained by adding hydrochloride acid to 10,000 mg/L of oxalic acid to adjust pH thereof to 1.02 was injected as a second liquid and contacted for 2 hours. As a result, a bag-shaped body was dissolved. After the contact with the second liquid for 2 hours, suction filtration operation was restarted.

The investigation results are shown in Table 2. As a result of measurement of the respective recovery ratios, the recovery ratio was low as 29% in the chemical cleaning condition 1, and the recovery ratio was low as 66% in the chemical cleaning condition 2. On the other hand, the recovery ration was high as 88% in the chemical cleaning condition 3. Furthermore, the recovery ratio was 100% in the chemical cleaning condition 4, and thus recovered up to the same degree as that at the start of the operation.

When the operation was restarted using the membrane chemical-cleaned, decrease in the amount of permeate was again observed in 10 to 14 days after the start of operation in the membranes of the chemical cleaning conditions 1 and 2, having low recovery ratio. Hence, the second chemical cleaning was carried out. However, the recovery ratio after the second chemical cleaning was low as 30% in the chemical cleaning condition 1 and 39% in the chemical cleaning condition 2. Furthermore, after the second chemical cleaning, decrease in the amount of permeate was again observed in about one week after the start of cleaning. Therefore, the operation was stopped. On the other hand, the decrease in the amount of permeate was not observed for one week or more after the start of the operation in the membranes of the chemical cleaning conditions 3 and 4.

It was confirmed from those results that in a chemical cleaning method for a submerged membrane element used in a membrane bioreactor treatment in which organic wastewater containing high concentration of manganese is subjected to a biological treatment in a bioreactor treatment tank and then subjected to solid-liquid separation by a membrane filtration device provided in the treatment tank, by applying the present invention, both organic matter decomposition and manganese removal are efficiently conducted, and recovery effect is enhanced.

It was further confirmed that by using an aqueous solution of sodium hypochlorite, chlorate or chlorine dioxide, having increased pH as an oxidizing agent of a first liquid, and using a mixed liquid of an organic acid and an inorganic acid as an acid of a second liquid, recovery effect is further enhanced

### INDUSTRIAL APPLICABILITY

The present invention is preferably used in subjecting organic wastewater containing high concentration of manganese to a membrane bioreactor treatment.

### DESCRIPTION OF REFERENCE NUMERALS AND SIGNS

1: Organic wastewater (raw water)
2: MBR membrane filtration device
3: Bioreactor treatment tank
4: filtrate tank
5: Treated water
6: Raw water supply pump
7: Air supply device
8: Aeration device
9: Suction pump
10: Activated sludge withdrawal pump
11: Withdrawn sludge (excessive activated sludge)
12: Supporting plate
13: Membrane covered with manganese precipitated
14: Chemical maintained in gap

## Claims

1. A cleaning method for a submerged membrane element used in a membrane bioreactor treatment in which organic wastewater containing 1 mg/L or more of manganese is subjected a biological treatment in a bioreactor treatment tank and then subjected to solid-liquid separation by a membrane filtration device provided in the bioreactor treatment tank,
wherein after a first liquid containing an oxidizing agent is injected from a secondary side of the submerged membrane element to a primary side thereof and maintained for a certain period of time, the first liquid containing an oxidizing agent is suction-discharged from the secondary side to the outside of the system, and then a second liquid containing an acid is injected from the secondary side of the submerged membrane element to the primary side thereof and maintained for a certain period of time, followed by conducting suction filtration operation.

2. The cleaning method for a submerged membrane element according to claim 1, wherein the oxidizing agent is an aqueous solution having pH of 12 or more and containing at least one selected from the group consisting of sodium hypochlorite, chlorate and chlorine dioxide.

3. The cleaning method for a submerged membrane element according to claim 1 or 2, wherein the acid is a mixed liquid of an organic acid and an inorganic acid.

4. The cleaning method for a submerged membrane element according to claim 3, wherein the organic acid is oxalic acid or citric acid.

5. The cleaning method for a submerged membrane element according to claim 3 or 4, wherein the inorganic acid contains at least one selected from the group consisting of hydrochloric acid, nitric acid and sulfuric acid.

6. The cleaning method for a submerged membrane element according to any of claims 3 to 5, wherein the mixed liquid has pH of 2 or less.
